# EUROPÄISCHE PATENTSCHRIFT

(11) **EP 2 240 691 B1**
(45) Veröffentlichungstag und Bekanntmachung des Hinweises auf die Patenterteilung: **05.12.2012**
(21) Anmeldenummer: 09708528.6
(22) Anmeldetag: 29.01.2009
(51) Int. Cl.: F04B 1/22, F04B 23/06, F02C 7/32

(54) **TRIEBWERKSGETRIEBENE HYDRAULIKPUMPE**
ENGINE-DRIVEN HYDRAULIC PUMP
POMPE HYDRAULIQUE ENTRAÎNÉE PAR UN MÉCANISME MOTEUR

(30) Priorität: 07.02.2008 DE 102008007840; 07.02.2008 US 63905
(43) Veröffentlichungstag der Anmeldung: 20.10.2010
(73) Patentinhaber: Airbus Operations GmbH, 21129 Hamburg (DE)
(72) Erfinder: VÖTTER, Axel, 21224 Rosengarten (DE); MÜLLER, Ulrich, 28844 Weyhe (DE)
(74) Vertreter: Isarpatent
(86) Internationale Anmeldenummer: PCT/EP2009/051007
(87) Internationale Veröffentlichungsnummer: WO 2009/098163

(56) Entgegenhaltungen:
- EP-A- 1 657 102
- DE-A1- 1 949 612
- DE-A1- 19 755 661
- GB-A- 865 648
- US-A- 3 440 965
- US-A- 4 143 996
- US-A- 4 754 940

## Beschreibung

Die Erfindung betrifft eine triebwerksgetriebene Hydraulikpumpe für ein Flugzeug .

Triebwerksgetriebene Hydraulikpumpen (Engine Driven Pump, EDP) nach dem Stand der Technik sind zumeist Axialkolbenpumpen, welche an einer rotierenden Antriebswelle zur Verfügung gestellte mechanische Leistung in hydraulische Leistung übertragen. Dabei werden bezüglich der Antriebswelle in axialer Richtung angeordnete Kolben mittels der vom Triebwerk des Flugzeugs angetriebenen Welle über eine Taumelscheibe translatorisch hin und her bewegt. Über diese Hubbewegung wird ein Hydraulikfluid angesaugt und unter hohem Druck in einen Hydraulikkreislauf gespeist. Die Taumelscheibe ist schwenkbar gelagert und lässt sich in ihrer Neigung mittels eines Steuerkolbens, der von der Hochdruckseite der Pumpe druckbeaufschlagt wird, im Sinne einer Veränderung des Kolbenhubs in ihrer Neigung erstellen. Liegt am Pumpenausgang ein hoher Druck an, wird die Taumelscheibe gegen eine Feder in Richtung auf ihre Nullage zurückgeschwenkt, so dass der Hub der Kolben minimal wird und die Pumpe nicht oder wenig fördert. Liegt am Ausgang der Pumpe dagegen ein niedriger Druck an, schwenkt die Feder die Taumelscheibe, so dass ein größerer oder maximaler Hub und damit eine größere bzw. maximale Förderleistung der Pumpe erzeugt wird.

Sollen mit solchen Axialkolbenpumpen hohe Volumenströme realisiert werden, müssen Kolben und Kolbenhub vergrößert werden. Da hierbei auch die dynamischen Massenkräfte steigen, muß die Antriebsdrehzahl der Pumpe reduziert werden, damit eine Beschädigung der Pumpe durch zu hohe dynamische Lasten ausgeschlossen werden. Eine Reduzierung der Drehzahl führt allerdings auch zu einer Verminderung des Förderstroms der Pumpe. Eine Möglichkeit, hohe Volumenströme bei gleichzeitig hoher Drehzahl zu realisieren, ist die Verwendung zweier kleinerer Pumpeneinheiten, die von einer Antriebswelle getrieben werden. Bedingt durch die kleineren Hübe und kleineren Taumelscheibendurchmesser sind entsprechend auch die dynamischen Kräfte geringer, so dass mit relativ kleinen Baugruppen hohe Volumenströme realisiert werden können. Eine bekannte Konstruktion der Firma Bosch Rexroth sieht zwei Pumpeneinheiten mit jeweils Taumelscheibe, Kolben und Steuerkolben vor, die auf einer Antriebswelle in Reihe angeordnet sind. Damit wird das Fördervolumen einer herkömmlichen Pumpe verdoppelt, während die Drehzahl auf gleichem Niveau gehalten werden kann. Aufgrund der in Reihe angeordneten Pumpeneinheiten hat diese bekannte Konstruktion jedoch eine erhebliche Baulänge, was bei manchen Anwendungen nachteilig ist. Denn während der hydraulische Leistungsbedarf bei großen modernen Transportflugzeugen und damit auch der erforderliche Volumenstrom triebwerksgetriebener Hydraulikpumpen zunehmend steigt, ist der zur Verfügung stehende Einbauraum im allgemeinen begrenzt. Insbesondere stellt die Länge der Pumpen oftmals ein Problem dar, da bei manchen Triebwerkstypen technisch bedingt die Pumpen quer zur Triebwerkslängsachse zu installieren sind. Bei den bekannten Hydraulikpumpen mit zwei in Reihe angeordneten Pumpeneinheiten führt eine Pumpeninstallation quer zur Triebwerkslängsachse zu einer sehr ausladenden Konstruktion, die schwer zu realisieren ist und oftmals aus dem vorgegebenen Bauraum herausragt.

Das Dokument DE 1 949 612 A1, das den nächstliegenden Stand der Technik darstellt, offenbart eine Hydraulikpumpe, mit einer ersten und einer zweiten Pumpeneinheit, die jeweils eine verstellbare Taumelscheibe und eine mit dieser gekoppelte und durch eine Pumpenwelle angetriebene Kolbenbaugruppe umfassen, mit einer Verstelleinrichtung zum Verstellen der Taumelscheibenneigung und mit einer Antriebswelle, über welche die Hydraulikpumpe unter Erzeugung von Hydraulikdruck antreibbar ist, wobei die Pumpeneinheiten parallel angeordnet sind und jeweils eine Pumpenwelle aufweisen, die über ein Getriebe mit der Antriebswelle gekoppelt sind.

Die Aufgabe der Erfindung ist es, eine triebswerksgetriebene Hydraulikpumpe zu schaffen, welche bei kompakter Bauweise einen hohen Volumenstrom leistet.

Die Aufgabe wird gelöst durch eine triebwerksgetriebene Hydraulikpumpe mit den Merkmalen des Anspruchs 1.

Vorteilhafte Weiterbildungen und Ausgestaltungen der erfindungsgemäßen Hydraulikpumpe sind Gegenstand der Unteransprüche.

Durch die Erfindung wird eine triebswerksgetriebene Hydraulikpumpe für ein Flugzeug geschaffen, mit einer ersten und einer zweiten Pumpeneinheit, die jeweils eine verstellbare Taumelscheibe und eine mit dieser gekoppelte und durch eine Pumpenwelle angetriebene Kolbenbaugruppe umfassen, mit einer Steuervorrichtung zum Verstellen der Taumelscheibenneigung und mit einer Antriebswelle, über welche die Hydraulikpumpe unter Erzeugung von Hydraulikdruck an einer Ausgangsleitung von einem Triebwerk des Flugzeugs antreibbar ist. Erfindungsgemäß ist es vorgesehen, dass die Pumpeneinheiten parallel angeordnet sind und jeweils eine Pumpenwelle aufweisen, die über ein Getriebe mit der Antriebswelle gekoppelt sind.

Ein wesentlicher Vorteil der erfindungsgemäßen triebwerksgetriebenen Hydraulikpumpe liegt darin, dass mit der Verwendung zweier kleiner, parallel angeordneter und schnell laufender Pumpeneinheiten hohe Volumenströme realisiert werden können, ohne dass die Länge und damit der erforderliche Bauraum im Vergleich zu einer herkömmlichen einzelnen Axialkolbenpumpe signifikant vergrößert wird.

Gemäß einer Ausführungsform der Erfindung ist das die Pumpenwelle mit der Antriebswelle koppelnde Getriebe durch ein Stirnradgetriebe gebildet.

Gemäß einer weiteren Ausführungsform der Erfindung ist es vorgesehen, dass die Taumelscheiben der parallel angeordneten Pumpeneinheiten mittels einer einzigen mit jeder der Taumelscheiben gekoppelten Steuervorrichtung verstellbar sind. Durch die Verwendung einer einzigen Steuer- bzw. Regelvorrichtung für beide Pumpeneinheiten ist verglichen mit herkömmlichen Axialkolbenpumpen bei gleicher Leistung vorteilhafterweise eine Gewichtsreduzierung zu erwarten.

Die Steuervorrichtung kann insbesondere durch einen Steuerkolben gebildet sein.

Der Steuerkolben kann durch eine Steuerleitung mit der Ausgangsleistung der Hydraulikpumpe gekoppelt sein.

Gemäß einer Ausführungsform der Erfindung ist es vorgesehen, dass die Pumpeneinheiten in einem gemeinsamen Gehäuse angeordnet sind. Die Anordnung der Pumpeneinheiten in einem gemeinsamen Gehäuse hat eine vorteilhafte Gewichtsreduzierung zur Folge.

Gemäß einer Ausführungsform der Erfindung ist es vorgesehen, dass jede Pumpeneinheit eine jeweilige Ausgangsleitung aufweist, welche in dem Gehäuse der Hydraulikpumpe zu einer gemeinsamen Ausgangsleitung zusammengefasst sind.

Weiter kann es vorgesehen sein, dass jede Pumpeneinheit eine jeweilige Saugleitung aufweist, welche im Gehäuse von einer gemeinsamen Saugleitung abzweigen.

Gemäß einer weiteren Ausführungsform der Erfindung ist es vorgesehen, dass die Kolben der ersten und zweiten Kolbenbaugruppe im Sinne einer Minimierung von Druckpulsationen gegeneinander versetzt angeordnet sind. So ergibt sich eine Phasenverschiebung der von den Kolbenbaugruppen der jeweiligen Pumpeneinheiten abgegebenen Druckspitzen, was zu einer vorteilhaften Reduzierung der Druckpulsationen an der Ausgangsleitung führt.

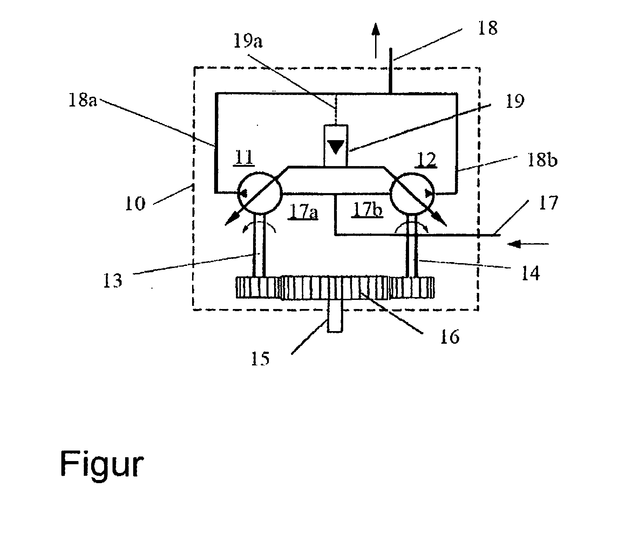

Im folgenden wird ein Ausführungsbeispiel der Erfindung anhand der Zeichnung erläutert.

Die Figur zeigt ein vereinfachtes Schema einer triebwerksgetriebenen Hydraulikpumpe für das Hydrauliksystem eines Flugzeugs gemäß einem Ausführungsbeispiel der Erfindung.

Die gezeigte triebwerksgetriebene Hydraulikpumpe umfasst eine erste Pumpeneinheit 11 und eine zweite Pumpeneinheit 12, die jeweils eine in der Figur nicht eigens dargestellte verstellbare Taumelscheibe und eine durch eine jeweilige Pumpenwelle 13 bzw. 14 angetriebene, auch nicht eigens dargestellte Kolbenbaugruppe umfassen. Art und Aufbau der Pumpeneinheiten als solche sind im Stande der Technik bekannt. Eine Steuervorrichtung 19 dient zum Verstellen der Taumelscheibenneigung und damit des von der Pumpe geförderten Volumenstroms, der an einer Ausgangsleitung 18 zur Verfügung steht. Die Hydraulikpumpe wird von einer Antriebswelle 15 von einem in der Figur nicht dargestellten Triebwerk eines Flugzeugs angetrieben.

Die jeweils eine Pumpenwelle 13, 14 aufweisenden Pumpeneinheiten 11, 12 sind in einem gemeinsamen Gehäuse 10 parallel angeordnet und über ein Getriebe 16 gemeinsam mit der Antriebswelle 15 gekoppelt. Bei dem in der Figur dargestellten Ausführungsbeispiel ist das die Pumpenwellen 13, 14 mit der Antriebswelle 15 koppelnde Getriebe 16 durch ein Stirnradgetriebe gebildet, so dass die beiden Pumpenwellen 13, 14 auch im geometrischen Sinne parallel zueinander angeordnet sind.

Zum Verstellen der Taumelscheibenneigung der beiden Pumpeneinheiten 11, 12 ist eine gemeinsame, einzige Steuer- bzw. Regelvorrichtung vorgesehen, welche einen Steuerkolben 19 umfasst, der über eine Steuerleitung 19a mit der Ausgangsleitung 18 der Hydraulikpumpe gekoppelt ist.

Jede Pumpeneinheit 11, 12 hat eine jeweilige eigene Ausgangsleitung 18a, 18b, die in dem Gehäuse 10 der Hydraulikpumpe zu einer gemeinsamen Ausgangsleitung 18 zusammengefasst sind. Ähnlich hat auch jede Pumpeneinheit 11, 12 eine jeweilige Saugleitung 17a, 17b, welche im Gehäuse 10 von einer gemeinsamen Saugleitung 17 abzweigen.

Bei der dargestellten triebwerksgetriebenen Hydraulikpumpe sind die beiden Pumpeneinheiten 11, 12 nicht auf einer gemeinsamen Antriebswelle angeordnet, wie bei der eingangs beschriebenen bekannten Hydraulikpumpe, sondern verfügen jeweils über eigene Pumpenwellen 13, 14, die über ein Getriebe 16 angetrieben werden. Das Installationsprinzip herkömmlicher Hydraulikpumpen als solches bleibt unverändert. Die Saugleitung 17 führt der Pumpe Fluid zu, dieser Volumenstrom wird erst innerhalb des Gehäuses 10 auf die jeweiligen Einzelleitungen 17a, 17b aufgeteilt und versorgt beide Pumpeneinheiten 11, 12. Die Förderströme beider Pumpeneinheiten 11, 12 werden im Gehäuse 10 wieder von den einzelnen Ausgangsleitungen 18a, 18b zusammengeführt und treten über die gemeinsame Ausgangsleitung 18 aus. Im Gegensatz zu herkömmlichen Pumpen werden die Taumelscheiben beider Pumpeneinheiten 11, 12 bei dem dargestellten Ausführungsbeispiel über einen einzigen gemeinsamen Steuerkolben 19 ausgeschwenkt, der von der gemeinsamen Hochdruckseite 18 betätigt wird. Dadurch wird sichergestellt, dass beide Pumpeneinheiten 11, 12 unter weitgehend gleicher Last betrieben werden.

Prinzipbedingt verursacht jeder Kolbenhub der jeweiligen Kolbenbaugruppen einen Druckstoß in den Ausgangsleitungen 18a, 18b, die entsprechend einen pulsierenden Volumenstrom an der gemeinsamen Ausgangsleitung 18 erzeugen. Durch eine Anordnung der jeweiligen Kolbenbaugruppen der beiden Pumpeneinheiten 11, 12 um ihre Längsachse verdreht zueinander, so dass die die Flüssigkeit verdrängenden, fördernden Kolben der einen Baugruppe versetzt zu den die Flüssigkeit verdrängenden Kolben der zweiten Baugruppe angeordnet sind, lassen sich diese Pulsationen vermindern.

### Bezugszeichenliste

- 10: Gehäuse
- 11: Pumpeneinheit
- 12: Pumpeneinheit
- 13: Pumpenwelle
- 14: Pumpenwelle
- 15: Antriebswelle
- 16: Getriebe
- 17, 17a, 17b: Saugleitung
- 18, 18a, 18b: Ausgangsleitung
- 19: Steuerkolben
- 19a: Steuerleitung

## Patentansprüche

1. Triebwerksgetriebene Hydraulikpumpe für ein Flugzeug, mit einer ersten und einer zweiten Pumpeneinheit (11, 12), die jeweils eine verstellbare Taumelscheibe und eine mit dieser gekoppelte und durch eine Pumpenwelle (13, 14) angetriebene Kolbenbaugruppe umfassen, mit einem Steuerkolben (19) zum Verstellen der Taumelscheibenneigung und mit einer Antriebswelle (15), über welche die Hydraulikpumpe unter Erzeugung von Hydraulikdruck an einer Ausgangsleitung (18) von einem Triebwerk des Flugzeugs antreibbar ist, wobei die Pumpeneinheiten (11, 12) parallel angeordnet sind und die Pumpenwellen (13, 14) über ein Getriebe (16) mit der Antriebswelle (15) gekoppelt sind, und wobei die Taumelscheiben der Pumpeneinheiten (11, 12) mittels einem einzigen, mit jeder der Taumelscheiben gekoppelten Steuerkolben (19) zum Betreiben der Pumpeneinheiten (11, 12) unter weitgehend gleicher Last verstellbar sind.

2. Hydraulikpumpe nach Anspruch 1, **dadurch gekennzeichnet, dass** das die Pumpenwellen (13, 14) mit der Antriebswelle (15) koppelnde Getriebe (16) durch ein Stirnradgetriebe gebildet ist.

3. Hydraulikpumpe nach Anspruch 1 oder 2, **dadurch gekennzeichnet, dass** der Steuerkolben (19) über eine Steuerleitung (19a) mit der Ausgangsleitung (18) der Hydraulikpumpe gekoppelt ist.

4. Hydraulikpumpe nach wenigstens einem der vorhergehenden Ansprüche, **dadurch gekennzeichnet, dass** die Pumpeneinheiten (11, 12) in einem gemeinsamen Gehäuse angeordnet sind.

5. Hydraulikpumpe nach Anspruch 4, **dadurch gekennzeichnet, dass** jede Pumpeneinheit (11, 12) eine jeweilige Ausgangsleitung (18a, 18b) aufweist, welche in dem Gehäuse (10) der Hydraulikpumpe zu einer gemeinsamen Ausgangsleitung (18) zusammengefaßt sind.

6. Hydraulikpumpe nach Anspruch 5, **dadurch gekennzeichnet, dass** jede Pumpeneinheit (11, 12) eine jeweilige Saugleitung (17a, 17b) aufweist, welche im Gehäuse (10) von einer gemeinsamen Saugleitung (17) abzweigen.

7. Hydraulikpumpe nach wenigstens einem der vorhergehenden Ansprüche, **dadurch gekennzeichnet, dass** die Kolben der ersten und zweiten Kolbenbaugruppe im Sinne einer Minimierung von Druckpulsationen gegeneinander versetzt angeordnet sind.

## Claims

1. Engine-driven hydraulic pump for an aircraft, comprising a first and a second pump unit (11, 12), which each comprise an adjustable wobble plate and a piston assembly which is coupled thereto and driven by a pump shaft (13, 14), comprising a control piston (19) for adjusting the wobble plate inclination, and comprising a drive shaft (15), via which the hydraulic pump can be driven by an engine of the aircraft so as to generate hydraulic pressure at an output line (18), wherein the pump units (11, 12) are arranged parallel and the pump shafts (13, 14) are coupled to the drive shaft (15) via a transmission (16), and wherein the wobble plates of the pump units (11, 12) can be adjusted by means of a single control piston (19), coupled to each of the wobble plates, for operating the pump units (11, 12) under a substantially equal load.

2. Hydraulic pump according to claim 1, **characterised in that** transmission (16) which couples the pump shafts (13, 14) to the drive shaft (15) is formed by a spur gear transmission.

3. Hydraulic pump according to either claim 1 or claim 2, **characterised in that** the control piston (19) is coupled to the output line (18) of the hydraulic pump via a control line (19a).

4. Hydraulic pump according to at least one of the preceding claims, **characterised in that** the pump units (11, 12) are arranged in a common housing.

5. Hydraulic pump according to claim 4, **characterised in that** each pump unit (11, 12) comprises a respective output line (18a, 18b), said lines being combined to form a common output line (18) in the housing (10) of the hydraulic pump.

6. Hydraulic pump according to claim 5, **characterised in that** each pump unit (11, 12) comprises a respective suction line (17a, 17b), said lines branching off from a common suction line (17) in the housing (10).

7. Hydraulic pump according to at least one of the preceding claims, **characterised in that** the pistons of the first and second piston assembly are arranged mutually offset in such a way as to minimise the pressure pulsations.

## Revendications

1. Pompe hydraulique entraînée par un mécanisme moteur pour un aéronef, comportant une première et une deuxième unité de pompe (11, 12), lesquelles comprennent respectivement un plateau oscillant et un sous-ensemble piston accouplé avec celui-ci et entraîné par un arbre de pompe (13, 14), comportant un piston de commande (19) pour régler l'inclinaison du plateau oscillant et comportant un arbre d'entraînement (15) par le biais duquel la pompe hydraulique peut être entraînée par un mécanisme moteur de l'aéronef en produisant de la pression hydraulique sur une conduite de sortie (18), dans laquelle les unités de pompe (11, 12) sont disposées en parallèle et les arbres de pompe (13, 14) sont couplés avec l'arbre d'entraînement (15) par le biais d'un engrenage (16), et dans laquelle les plateaux oscillants des unités de pompe (11, 12) sont réglables au moyen d'un piston de commande (19) unique couplé avec chacun des plateaux oscillants pour faire fonctionner les unités de pompe (11, 12) sous une charge principalement égale.

2. Pompe hydraulique selon la revendication 1, **caractérisée par le fait que** l'engrenage (16) couplant les arbres de pompe (13, 14) avec l'arbre d'entraînement (15) est formé par un réducteur à engrenages droits.

3. Pompe hydraulique selon la revendication 1 ou 2, **caractérisée par le fait que** le piston de commande (19) est couplé par le biais d'une conduite de commande (19a) avec la conduite de sortie (18) de la pompe hydraulique.

4. Pompe hydraulique selon au moins l'une des revendications précédentes, **caractérisée par le fait que** les unités de pompe (11, 12) sont disposées dans un boîtier commun.

5. Pompe hydraulique selon la revendication 4, **caractérisée par le fait que** chaque unité de pompe (11, 12) présente une conduite de sortie (18a, 18b) respective, les conduites étant rassemblées dans le boîtier (10) de la pompe hydraulique en une conduite de sortie (18) commune.

6. Pompe hydraulique selon la revendication 5, **caractérisée par le fait que** chaque unité de pompe (11, 12) présente une conduite d'aspiration (17a, 18b) respective, les conduites d'aspiration dérivant, dans le boîtier (10), d'une conduite d'aspiration (17) commune.

7. Pompe hydraulique selon au moins l'une des revendications précédentes, **caractérisée par le fait que** les pistons du premier et du second sous-ensemble piston sont disposés décalés les uns par rapport aux autres dans le but de réduire à un minimum les pulsations de pression.
